Europäisches Patentamt

(19) European Patent Office

Office européen des brevets

(11) Publication number: **0 291 228 B1**

(12) **EUROPEAN PATENT SPECIFICATION**

(45) Date of publication of patent specification: 28.08.91 Bulletin 91/35

(51) Int. Cl.⁵: **A23L 1/05, C08L 3/00**

(21) Application number: 88304067.7

(22) Date of filing: 05.05.88

(54) **Gellan gum/starch blends.**

(30) Priority: 14.05.87 US 50264

(43) Date of publication of application: 17.11.88 Bulletin 88/46

(45) Publication of the grant of the patent: 28.08.91 Bulletin 91/35

(84) Designated Contracting States: CH DE FR GB IT LI NL

(56) References cited:
EP-A- 0 020 096
EP-A- 0 225 154
DE-A- 2 814 664
US-A- 4 503 084
US-A- 4 517 216

(73) Proprietor: MERCK & CO. INC.
126, East Lincoln Avenue P.O. Box 2000
Rahway New Jersey 07065-0900 (US)

(72) Inventor: Clark, Ross C.
4870 Seda Drive
San Diego California 92124 (US)
Inventor: Burgum, Daniel R.
6056 Wanda Court
San Diego California 92120 (US)

(74) Representative: Hesketh, Alan, Dr.
European Patent Department Merck & Co., Inc. Terlings Park Eastwick Road
Harlow Essex, CM20 2QR (GB)

**Description**

## BACKGROUND OF THE INVENTION

Starch is the most commonly used material to thicken aqueous solutions, especially foods. In a typical application starch is mixed with water, heated to swell the starch granules and solubilize amylose molecules, and the dispersion cooled to form a gel or paste. Chemically modified starches comprise modified starches comprise over 40% of the starches used in the food industry. Chemical modification (cross-linking) limits the swelling of the granules and produces starches which are more shear stable than unmodified starches. Chemical modification (substitution) controls the way that amylose chains re-associate to form gels.

Combinations of gellan gum and starch have been disclosed in the art. For example, Baird, et al, Bio/Technology, November 1983, page 781, teach that it may be desirable to use gellan gum in combination with modified starches to obtain optional product texture and stability. Kang, et al, Some Novel Bacterial Polysaccharides of Recent Development, page 240, teach that gellan gum may be used as a structuring agent to replace of partially replace the starch. Sanderson et al, Food Technology, April 1983, teach at page 66, Table 4, a starch jelly formulation containing 6.56% starch and 0.2% gellan gum ; at page 68, Figure 8 an amylograph for a 4.8% starch/0.2% gellan gum blend ; and at page 68, the advantages of combining starch and gellan gum in pie fillings and puddings. U.S. Patent 4,517,216, Table 1-1 discloses blends of 0.25% gellan gum and 0.25% corn starch.

## SUMMARY OF THE INVENTION

It has now been found that blends of gellan gum and starch in the range, by weight, 0.01-1% gellan gum and 1.5-8% starch, the balance being water, optionally with the materials such as sugars, (e.g., sucrose, fructose, etc.) animal or vegetable proteins (e.g., milk or soy), fats, flavorings, colorings, etc., exhibit useful rheological and other physical properties that make them useful in various applications, primarily in food compositions.

## DETAILED DESCRIPTION

By gellan gum is meant deacetylated and partially deacetylated gellan gum and the clarified forms thereof such as are taught in U.S. Patents 4,326,052 (Kang et al ;) and 4,503,084 (Baird, et al.). By starch is meant corn, waxy maize, tapioca, wheat, potato, and rice starch. This term is also intended to include native and chemically modified starches, such as cross-linked and substituted starches.

## Viscosity Effects

Gellan gum has very little effect on the viscosity of starch pastes during gelatinization. This is important in that it allows for faster heat penetration, i.e., reduced cooking time and allows the use of existing equipment without a change in capacity, etc. This is unexpected as it is known that most hydrocolloids when blended with starch will exhibit a marked increase in viscosity during gelatinization of the starch as compared to the starch sample without gum. The main advantage of gellan gum is at low usage levels (0.1%), where it significantly affects the rheology of the starch paste after hydration. Other gums used at these low levels produce little end effect but do not increase the viscosity during gelatinization. At higher use levels, they do increase gelatinization viscosities and end paste viscosities.

The major parameters governing starch behavior are gelatinization and retrogradation. During gelatinization (heating over a temperature range) the starch granule swells and loses birefringence ; the pastes clarify and viscosity increases ; amylose molecules are solubilized and leach out. On cooling, retrogradation ("setback") occurs. The amylose molecules re-associate to form a precipitate or gel ; the paste becomes cloudy ; and syneresis can occur.

To follow the viscosity build of starch while cooking, the Brabender Visco-Amylograph is used. The starch is slurried in either water or water to which an acid or other ingredient has been added, then heated in a revolving cup to a designated temperature and held there for a set length of time. Viscosity is measured through resistance exerted on a paddle suspended in the starch paste. A continuous recording of this resistance is taken on a chart recorder. This resulting curve records the point of gelatinization, the rate of viscosity development, the peak viscosity, and the rate of viscosity breakdown.

The Brabender viscosity curves reveal the comparative viscosity levels and comparative pasting temperatures of starches. The standard method used calls for the starch slurries to be heated rapidly to 50°C, then at a rate of 1.5°C/minute to 95°C. They are held at that temperature for between 15 and 30 minutes then cooled at a rate of 1.5°C/minutes to 50°C. The four major points on the typical curve are :

1) The Pasting Temperature : the temperature at which the viscosity development is first seen. This is the onset of gelatinization.

2) Pasting Peak : this viscosity is important because in most cases the user must cook through this stage to obtain a usable starch paste. Comparison of the pasting temperature with the temperature at which the pasting peak occurs provides an indication of the gelatinization range of the starch.

3) Viscosity when paste reaches 95°C : The relation of this value to the peak viscosity reflects the ease of cooking the starch. It provides an indication of the fragility of the swollen starch granules.

4) Viscosity after Cooking : an indication of how stable the starch is to further shear. This is the viscosity after the 95°C holding period.

Through the use of the Visco-Amylograph, starches of different varieties, different modification treatments, or gelatinized in different media can be compared. Corn starch heated to 95°C will show a rather rapid increase in viscosity after gelatinization until it reaches a peak. The viscosity gradually decreases during holding then rapidly increases as the paste cools. The waxy starch will increase in viscosity more rapidly than the corn starch, peak sooner and higher, and break down faster and considerably more. On cooling, the waxy corn shows only a very little increase in viscosity after gelatinization with a much higher peak viscosity but it also breaks down faster and considerably more than the corn starch. On cooling it shows a moderate increase in viscosity due to its intermediate amount of amylose present. The effect of various agents and additives on the gelatinization and pasting of starch may also be examined. The addition of a relatively small amount (0.5%) of most hydrocolloids (such as carboxymethyl cellulose and xanthan gum) creates a dramatic increase in viscosity during cooking.

However, the addition of gellan gum to starch prior to gelatinization has only a slight effect on the viscosity of the paste during cook-up. This is in contrast to other hydrocolloids which, because they are used at higher usage levels and/or hold viscosity better at increased temperature than gellan gum, display a marked increase in viscosity during the gelatinization and cooking of the starch. This minimal viscosity effect during gelatinization combined with gellan gum's ability to provide a large effect on the final texture and viscosity after cooling provides an advantage in that it allows for faster heat penetration during cooking, and may allow for a reduction of the level of starch required. This is important in any product which requires high temperature processing such as canned products, or cook-up type starch fillings. This is also effective in reducing boil out in pie filling.

Effect on Shear Stability

The reactivity of gellan gum with starch represents a technique which can allow for the extension of the starch, or modification of its texture.

The major parameters governing starch behavior are gelatinization and retrogradation. Important processing variables in food which can effect starch gelatinization are temperature, time, shear, and pH. The higher the temperature, the more swollen the granule ; the more swollen the granule, the more fragile and susceptible it becomes to rupture by shearing, especially after cooling. In order to improve the shear stability of the starch paste, especially after cooling, the starch granule may be chemically modified to limit the swelling of the granule. Today, approximately 100,000 metric tons of the starch used in the food industry is modified. However, current trends in the market are to minimize the use of modified starches, or replace them with non-modified starches.

The blending of gellan gum with starch prior to gelatinization has now been found to improve the shear stability of the starch after cooling. Low levels (approximately 0.1%) of gellan gum have been found to impart a viscosity build following the shearing of the paste. It has been found that the dry blending of gellan gum with either unmodified or modified starches prior to heating improves the viscosity of the pastes following shearing. Also, it has been found that this is true under both neutral and acidic conditions.

A simple blend of starch (approximately 0.3 to 10.0%) and gellan gum (approx 0.1%) can be made prior to heating. The blend must be heated (greater than 85°C) to gelatinize the starch and fully hydrate the gellan gum. The blend or formulation can then be cooled to room temperature. This paste can then be sheared for 5 minutes or longer. Sixty percent or more of the viscosity will be lost during shearing, however, following shearing if the paste is left to stand several hours between 25 to 100% of the viscosity will rebuild in the paste. This would lend itself to pumpable fillings such as cream fillings, and fruit fillings for fried pies or donuts.

There are several procedures for determining the shear stability of starch samples. See, for example, H. Klaushofer, "On Determination of Shearing Stability of Starch Pastes" STARCH, June, 1975.

Gellan gum starch blends were tested for shear stability using the following protocol :

1) Measure out water in a 450 ml stainless steel cup.

2) Measure out gum and starch separately. Add the gum to the water with mechanical agitation. Stir for about 5 minutes. Add the starch to the gum solution and mix for an additional 5 minutes.

3) To gelatinize the starch, place the cup in a hot water bath heated to 95°C. Cover the solution with a plastic cover with a hole placed in the center to allow for the shaft of a propeller type stirrer to run through it. Mix the solution continuously at 360 rpm while cooking.

4) The native starches are left in the water bath for 30 minutes ; the modified starches for 45 minutes.

5) At the completion of cooking, remove the cups from the bath and allow to cool overnight at room temperature.

6) Take a viscosity reading on the cooled starch paste sample using a Brookfield RVT viscometer with Helipath attachment at 2.5 rpm using an appropriate T-bar type spindle.

7) Using a 3 bladed propeller type mixing blade 2" in diameter, mix the sample at 1800 rpm for 5 minutes.

8) Immediately following mixing, measure the viscosity again using the RVT viscometer.

9) Allow the sample to stand undisturbed overnight. Retake the viscosity using the RVT viscometer.

These trials demonstrated that gellan gum would gel the starch pastes after cooling. In all tests the starch pastes exhibited a gelled matrix with the addition of only 0.1% gellan gum. In most cases the addition of gellan gum did not improve the immediate shear stability of the starch paste as the viscosity generally dropped by more than 60% when measured immediately after shearing. However, it was found that by allowing the starch/gellan gum blend to stand following shearing, a noticeable viscosity increase was observed. This increase in viscosity was more noticeable in the unmodified, and lightly modified starches than in the more highly modified starches. One example was W-13 starch, a lightly cross-linked waxy maize starch, when blended with gellan gum in standard tap water (STW is deionized water containing 0.004M calcium and 0.48M sodium) with vinegar. After shearing this sample blend and allowing it to stand, the viscosity reading was higher than the viscosity before shearing. The highly modified starches displayed very good shear stability. However, the viscosity readings of these pastes, both before and after shearing, were lower than the viscosities of the starch blended with gellan gum after shearing.

These blends of gellan gum and starch may partially replace highly modified starches, and/or enhance their functionality. These blends find application in sauces, soups, and gravies. In addition, they are effective in pumpable type systems such as pumpable jellies, fillings or icings.

The gum starch blend is easily dispersed in cold water, and then can be heated to gelatinize the starch and solubilize the gum. Variations in starch/gellan gum levels effect the final outcome of the product, i.e., change the texture of the product making it more starch like or gelled like depending on the gum : starch ratio.

## Storage Stability

The addition of gellan gum to starch prior to gelatinization improves the water holding capacity of the starch. Low levels (about 0.1%) of gellan gum have been found to reduce water migration out of the starch pastes including both unmodified and modified starches under both neutral and acidic conditions. This would have application in any system where water binding is important, such as in puddings and pie fillings.

A simple blend of starch (about 3.0 to 10.0%) and gellan gum (about 0.1%) can be made prior to heating. The blend must be heated to gelatinize the starch and fully hydrate the gellan gum. The blend or formulation can then be cooled to room temperature, and no further processing is required.

Gellan/starch blends were tested for storage stability and water holding capacity using the following protocal :

1) Measure out STW (or STW with 2% 100 grain vinegar) in a 450 ml stainless steel cup.

2) Measure out gum and starch separately. Add the gum to the water with mechanical agitation. Stir for about 5 minutes. Add the starch to the gum solution and mix for an additional 5 minutes.

3) To gelatinize the starch, place the cup in a hot water bath heated to 95°C. Cover the solution with a plastic cover with a hole placed in the center to allow for the shaft of a propeller type stirrer to run through it. Mix the solution continuously at 360 rpm while cooking.

4) The native starches are left in the water bath for 30 minutes ; the modified starches for 45 minutes.

5) At the completion of cooking, pour aliquots of the cooked paste into five 50 ml beakers. Allow these samples to cool at room temperature for 30 minutes, then cover with a plastic film (such as Saran Wrap) and place in the refrigerator set at 2°C. Remove samples as required for testing (1, 2, 6 and 10 days).

6) The samples are removed from the refrigerator at the specified times and allowed to stand at room temperature for several hours. Then viscosities are taken using a Brookfield RVT viscometer with Helipath, 2.5 rpm spindle 3.

7) A portion of the sample is removed from the 50 ml beaker and placed in a plastic ring, 1" in diameter and 1/2" in height sitting on a No. 1 18.5 cm Whatman filter paper. The sample is placed in the ring, level to the top of the ring.

8) After one hour has elapsed, the sample is removed and the area dampened by the water migrating out of the paste is traced on the paper.

9) The paper is left to dry overnight.

10) ) Weigh the filter paper and record the weight (W1). Then cut out and weigh the previously wetted area (W2). W2/W1 × 100 = % wetted area ; i.e., a measure of the water retention of the blend.

The results of this test indicate that gellan gum improves the storage stability over a 10 day period as compared to the native starches. Gellan gum's effect in terms of improving the water holding capacity is more noticeable with the raw starches and lesser modified starches (such as W-13, than with the more highly modified starches. From examination of the test results it was found that the syneresis or water migration out of the starch paste is not strictly related to the viscosity of the paste. But gellan gum is effective in improving the water holding capacity of the starch in all samples tested.

This blend of gellan gum and starch may replace modified starches, and/or enhance their functionality in various food products such as puddings, pie fillings, and canned products. The gum/starch blend is easily dispersed in cold water, and then can be heated to gelatinize the starch and solubilize the gum. Variations in starch/gellan gum levels effect the final outcome of the final product ; i.e., change the texture of the final product.

Texture and Rheology Effects

The blending of gellan gum with starch prior to gelatinization has now been found to alter the texture and rheology of both native and lightly modified starches after cooling and shearing.

The addition of low levels (about 0.1%) of gellan gum has been found to gel starch pastes after cooling if sufficient ions are present. The texture of the pastes are basically determined by the concentration of the gellan gum, and the type and concentration of the starch used. Unmodified starches and lightly modified starches blended with gellan gum display a more brittle starch gel matrix, with is rather firm and cutable. Highly modified starches retain more of their starch paste texture which is rather salve-like and less gelled in texture.

If the pastes containing gellan gum are sheared, a noticeable drop in viscosity is observed. However, if these pastes are allowed to stand following shearing, an increase in viscosity is observed. The rheology of these pastes following shearing is changed from the initial cooked and cooled pastes. The unmodified starches lose their gel matrix, and become more pseudoplastic and somewhat resemble a xanthan gum solution. The lightly modified starches loose their firmer, cutable gel matrix, and have a more salve-like appearance, with a rather "chunky", gelled-like flow characteristic. Neither product, with either unmodified or modified starch, displays a grainy or pulpy type appearance as would be expected when a gel matrix is broken as during shearing.

The unmodified starch/gellan gum blends have utility in sauces, gravies or salad dressings, as a replacement for more highly modified starch, or other gums. The lightly modified starch gellan gum blends are useful where more highly modified starches are typically used.

Using the protocol described above for measuring shear stability, several starch/gellan gum blends were prepared. After shearing, a sample of gellan gum and (Amioca) native waxy maize starch was found to become rather pseudoplastic and somewhat resembled xanthan gum in its rheology.

A sample of Amioca starch was blended with xanthan gum and compared to an Amioca/gellan gum blend using the shear test procedure. The gellan gum at use levels equal to xanthan gum had a much more dramatic affect on the starch paste viscosity both before and after shearing than the xanthan gum did.

Another example was a lightly cross-linked waxy maize starch (W-13) when blended with gellan gum in standard tap water (STW) with 2%, 100 grain vinegar. After shearing this blend and allowing it to stand, the viscosity reading was higher than the viscosity before shearing. The texture of the blend was changed after this shearing from the initial gelled type matrix which was more brittle and cutable, to a more salve-like, gelled "chunky" flowing consistency.

These blends of gellan gum and starch may partially replace highly modified starches, and/or enhance their functionality. The blends find applications in sauces, soups, gravies, and salad dressings.

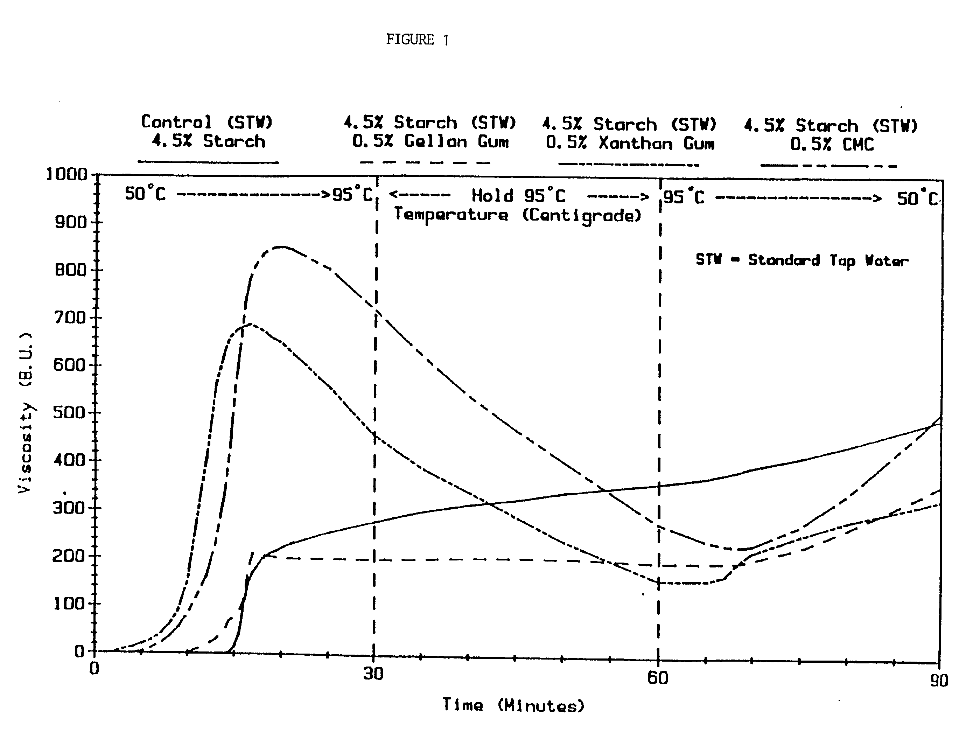

Figure 1 shows four Brabender amylographs of 4.5% cross-linked waxy corn starch with and without 0.5% added gum in Standard Tap Water.

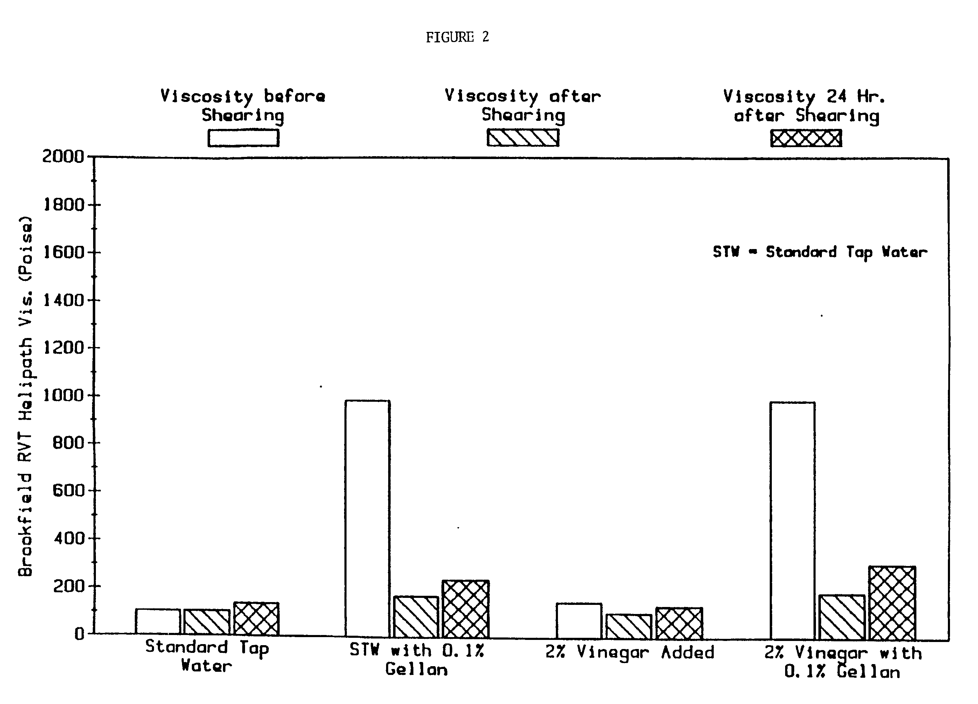

Figure 2 shows the shear stability of 5% acetylated, cross-linked waxy cornstarch with and without gellan gum (GELRITE®). The starch pastes were cooked and cooled, held for 18 hours, and then sheared at 1800 rpm for 5 minutes.

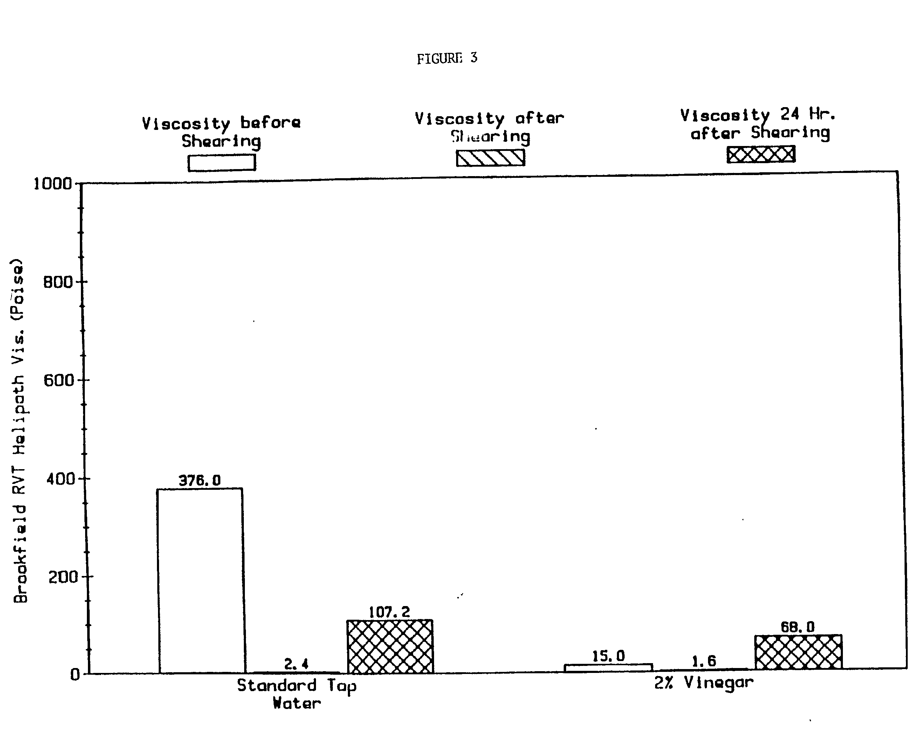

Figure 3 shows the shear stability of 0.1% gellan gum (GELRITE®) gels. The gels were prepared by heating and cooling, and allowed to stand for 18 hours. The gels were then sheared at 1800 rpm for 5 minutes.

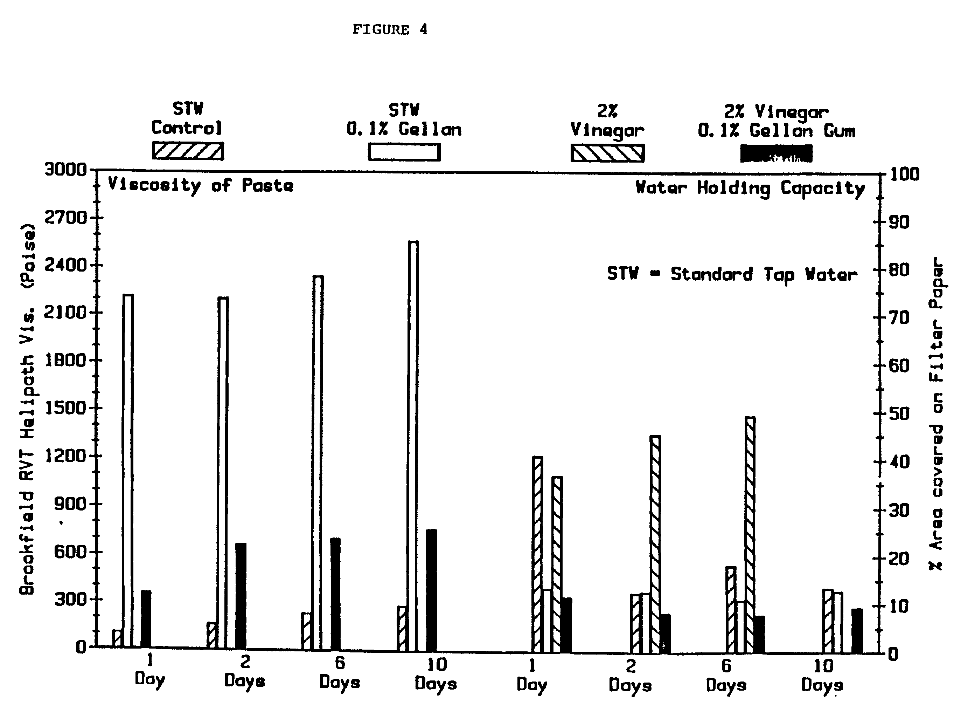

Figure 4 shows the storage stability of 5% waxy cornstarch pastes with and without 0.1% gellan gum (GELRITE®). The samples were stored at 2°C.

Claims

1. An aqueous composition comprising by weight 0.01 to 1% gellan gum, 1.5-8% starch, water, and one or more compounds selected from the group consisting of sugar, animal protein, vegetable protein, fat, flavoring, and coloring.

2. A food composition of Claim 1.

3. A composition of claim 1 wherein the starch is corn, waxy maize, tapioca, wheat, potato, or rich starch.

4. A composition of Claim 3 wherein the starch is native or chemically modified.

5. A composition of Claim 1 wherein the gellan gum is deactylated, clarified gellan gum.

6. A composition of Claim 1 wherein the gellan gum is partially deactylated gellan gum.

## Patentansprüche

1. Wässrige Zusammensetzung, welche, nach Gewicht, 0,01 bis 1% Gellangummi, 1,5 bis 8% Stärke, Wasser und eine oder mehrere aus der aus Zucker, Tierprotein, Pflanzenprotein, Fett, Geschmacksstoffen und Farbstoffen bestehenden Gruppe ausgewählte Verbindungen umfaßt.

2. Nahrungsmittelzusammensetzung nach Anspruch 1.

3. Zusammensetzung nach Anspruch 1, worin die Stärke Mais-, Weichmais-, Tapioka-, Weizen-, Kartoffel- oder Reisstärke ist.

4. Zusammensetzung nach Anspruch 3, worin die Stärke natürliche oder chemisch modifizierte Stärke ist.

5. Zusammensetzung nach Anspruch 1, worin das Gellangummi deacetyliertes, geklärtes Gellangummi ist.

6. Zusammensetzung nach Anspruch 1, worin das Gellangummi partiell deacetyliertes Gellangummi ist.

## Revendications

1. Composition aqueuse comprenant en poids 0,01% à 1% de gomme gellan, 1,5-8% d'amidon, de l'eau et un ou plusieurs composés choisis dans le groupe constitué de sucre, de protéine animale, de protéine végétale, de graisse, d'aromate et de colorant.

2. Composition alimentaire selon la revendication 1.

3. Composition de la revendication 1 dans laquelle l'amidon est de l'amidon de maïs, de maïs cireux, de tapioca, de blé, de pomme de terre ou de riz.

4. Composition de la revendication 3 dans laquelle l'amidon est naturel ou chimiquement modifié.

5. Composition de la revendication 1 dans laquelle la gomme gellan est une gomme gellan déacétylée, clarifiée.

6. Composition de la revendication 1 dans laquelle la gomme gellan est une gomme gellan partiellement déacétylée.

FIGURE 1

EP 0 291 228 B1

FIGURE 2

FIGURE 3

Viscosity before Shearing

Viscosity after Shearing

Viscosity 24 Hr. after Shearing

Brookfield RVT Halipath Vis. (Poise)

Standard Tap Water: 376.0, 2.4, 107.2

2% Vinegar: 15.0, 1.6, 68.0

FIGURE 4

EP 0 291 228 B1